Europäisches Patentamt

European Patent Office

Office européen des brevets

(19)

(11) Publication number: **0 124 611**

**B1**

(12) **EUROPEAN PATENT SPECIFICATION**

(45) Date of publication of patent specification: 31.05.89

(51) Int. Cl.⁴: **B 23 H 7/06**

(21) Application number: 83903312.3

(22) Date of filing: 27.10.83

(86) International application number:
PCT/JP83/00383

(87) International publication number:
WO 84/01735 10.05.84 Gazette 84/12

(54) A WIRE-CUT TAPER MACHINING METHOD.

(30) Priority: 27.10.82 JP 188737/82
27.10.82 JP 188738/82

(43) Date of publication of application:
14.11.84 Bulletin 84/46

(45) Publication of the grant of the patent:
31.05.89 Bulletin 89/22

(84) Designated Contracting States:
CH DE FR GB LI

(56) References cited:
JP-A-52 081 794
JP-A-55 048 529
JP-A-55 077 424

(73) Proprietor: FANUC LTD
3580, Shibokusa Aza-Komanba Oshino-mura
Minamitsuru-gun Yamanashi 401-05 (JP)

(72) Inventor: KISHI, Hajimu
Hino Hirayamadai Jutaku 1104 6-7-8,
Asahigaoka
Hino-shi Tokyo 191 (JP)
Inventor: SEKI, Masaki
3-15-2-406, Takaidonishi Suginami-ku
Tokyo 168 (JP)
Inventor: TANAKA, Kunio
5-8-13, Tamakawa-cho Akishima-shi
Tokyo 196 (JP)
Inventor: KAWASUMI, Masashi
1185-8, Shibokusa Oshino-mura
Minamitsuru-gun Yamanashi 401-05 (JP)

(74) Representative: Billington, Lawrence Emlyn
et al
HASELTINE LAKE & CO Hazlitt House 28
Southampton Buildings Chancery Lane
London WC2A 1AT (GB)

Courier Press, Leamington Spa, England.

## Description

This invention relates to a wire-cut taper cutting method and, more particularly, to a wire-cut taper cutting method for subjecting a workpiece to predetermined taper cutting by controlling two axes simultaneously on each of two control surfaces to control relative movement between the wire and workpiece by simultaneous four-axis control overall.

As is well-known in the art, a wire-cut electric discharge machine has a wire stretched between an upper guide and a lower guide and machines a workpiece by producing an electrical discharge between the wire and the workpiece. The workpiece, secured to a table, is transported in X and Y directions along a machining contour in response to commands from a numerical control apparatus. When the wire is tensioned normal to the table (workpiece), the upper and lower surfaces of the workpiece will be machined into contours which are identical. If the arrangement is such that the upper guide or lower guide can be displaced in the X and Y directions (referred to as the U and V axes) to incline the wire with respect to the workpiece as by displacing the upper guide or lower guide in a direction at right angles to the direction of workpiece movement, then the upper and lower surfaces of the workpiece will not be machined to the same contour, and the surface cut by the wire will be inclined. This is so-called taper cutting.

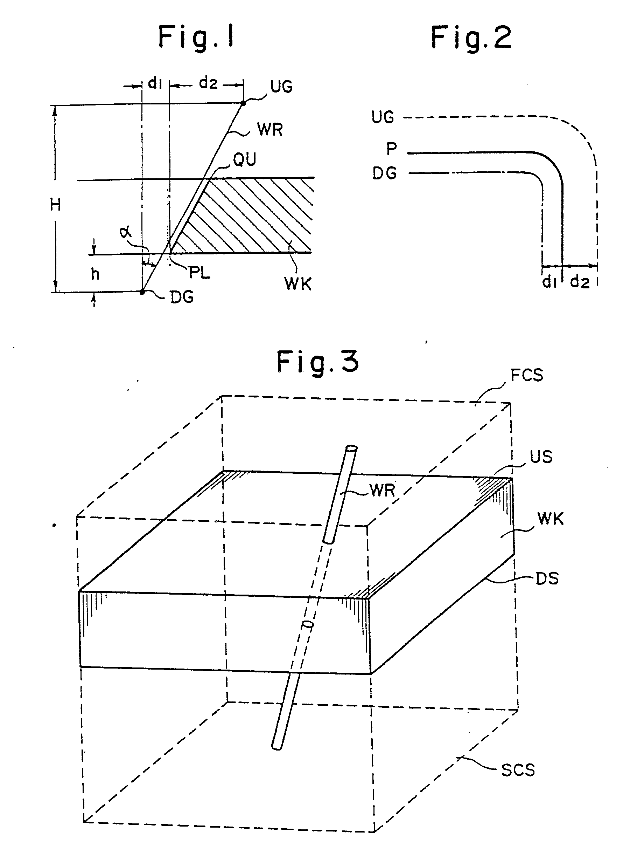

Fig. 1 is a view for explaining such taper cutting, in which a wire WR is stretched between an upper guide UG and a lower guide DG at a predetermined angle of inclination with respect to a workpiece WK. If we take the lower surface PL of the workpiece WK as the programmed contour (the upper surface QU of the workpiece WK may also serve as a programmed contour), and if we let $\alpha$ denote the taper angle, H the distance between the upper guide UG and lower guide DG, and h the distance from the lower guide DG to the lower surface of the workpiece WK, then the offset $d_1$ of the lower guide DG and the offset $d_2$ of the upper guide UG with respect to the lower surface PL of the workpiece, may be expressed as follows:

$$d_1 = h \cdot \tan\alpha + \frac{d}{2}$$

$$d_2 = H \cdot \tan\alpha - h \cdot \tan\alpha - \frac{d}{2}$$

$$= H \cdot \tan\alpha - d_1$$

Note that d is the cut width.

Accordingly, if the movement of the upper guide UG or of the lower guide DG between which the wire WR is stretched is so controlled in relation to workpiece movement that the offsets $d_1$, $d_2$ remain constant, then taper cutting at the taper angle $\alpha$ can be carrier out, as shown in Fig. 2. The dashed line and one-dot chain line in the Fig. 2 indicate the paths of the upper and lower guides UG, DG, respectively. Thus, if a programmed path on the upper or lower surface of the workpiece, feed speed on the programmed path, taper angle $\alpha$ and distances H, h, etc., are commanded as wire-cut electric discharge commands, cutting will be carried out in the manner commanded.

Parts having completely different upper and lower surface contours are now in demand. By way of example, such parts have an upper surface contour which is linear and a lower surface contour, corresponding to the linear contour, which is a circular arc. In other words, there is demand for a wire-cut electric discharge machine having a function that permits a workpiece to be cut into a part having the foregoing shape. There is also demand for a wire-cut electric discharge machine having a function that permits a workpiece, which is disposed at an incline, to be cut into a part whose upper and lower surfaces have entirely different contours. The reason for the latter is that mechanical considerations place a limitation upon the size of the taper angle in an NC wire-cut electric discharge machine having a taper cutting capability. As long as the workpiece is disposed in a horizontal attitude, it will be impossible to taper-cut the workpiece to a taper angle in excess of the maximum taper angle of the machine. More specifically, in a case where it is required to perform taper cutting at a taper angle greater than the maximum taper angle despite the fact that there is a limitation upon the taper angle, mounting the workpiece (the part material) at an incline rather than in parallel with a control surface (the XY programmed surface or UV lower guide travel surface) causes the taper angle relative to the control surface to fall within the limit of the maximum taper angle, thereby enabling the workpiece to be cut at a taper angle greater than the maximum taper angle. Therefore, when it is required to perform taper cutting at a taper angle in excess of the maximum taper angle decided by the machine, the workpiece must be mounted at an incline with respect to the control surface.

With the conventional taper cutting method, one example of which is disclosed in JP—A—5577424, taper cutting cannot be carried out when the upper and lower surface contours are entirely different, much less for different upper and lower surface contours where the workpiece is kept at an incline.

Accordingly, an object of the present invention is to provide a novel taper cutting method wherein,

2

when the upper and lower surface contours of a part are given, a part having these upper and lower surface contours can be cut.

Another object of the present invention is to provide a wire-cut taper cutting method wherein a part can be cut to different upper and lower surface contours even if a workpiece is mounted at an incline with respect to a control surface.

A further object of the present invention is to provide a wire-cut taper cutting method wherein NC data for simultaneous four-axis control are generated by using data giving the relative positional relationships between a workpiece and an XY programmed surface and between the workpiece and a lower guide travel surface, data giving the upper surface contour of a part, and data giving the lower surface contour of the part, whereby a part having these upper and lower surface contours can be machined in accordance with the NC data.

According to a first aspect of the invention there is provided a wire-cut taper cutting method for cutting a workpiece into a predetermined shape by controlling two axes simultaneously on each of two control surfaces, specified by entered data, to control relative movement between the wire and workpiece by simultaneous four-axis control overall, characterised by having:

a first step of entering data which include data for specifying at least an upper surface contour and lower surface contour of a part;

a second step of calculating, in dependence upon data entered in the first step, positions of projection points, wherein when there is spacing between two surfaces in at least one of two sets, one set having the upper surface of the part and a first control surface and the other set having the lower surface of the part and a second control surface, there are obtained positions of projection points along a straight line connecting corresponding points on the upper and lower surfaces of the part specified by said contour data, which projection points are obtained by projecting these points onto the control surface in the set having said spacing; and

a third step of performing simultaneous four-axis control, by using positional data giving corresponding points on the first and second control surfaces, in such a manner that the wire simultaneously traverses the corresponding points on said first and second control surfaces.

According to a second aspect of the invention there is provided a wire-cut taper cutting method for taper cutting a workpiece into a predetermined shape by controlling two axes simultaneously on each of two control surfaces, specified by entered data, to control relative movement between the wire and workpiece by simultaneous four-axis control overall, characterised in that the workpiece is disposed at an inclined attitude with respect to first and second control surfaces, and by having:

a first step of entering relative positional relationship data giving a relative positional relationship between the workpiece and the first control surface and between the workpiece and the second control surface, and data for specifying an upper surface contour and lower surface contour of a part;

a second step of calculating, in dependence upon data entered in the first step, positions of projection points, along a straight line connecting corresponding points on upper and lower surfaces of the part specified by said contour data, by projecting these points onto the first and second control surfaces; and

a third step of performing simultaneous four-axis control, by using positional data giving said projection points, in such a manner that the wire simultaneously traverses corresponding projection points on said first and second control surfaces.

The present invention may provide a wire-cut taper cutting method wherein simultaneous two-axis control is performed on each of two, i.e., first and second, control surfaces to effect simultaneous four-axis control overall, whereby even if a workpiece is to have completely different upper and lower surface contours, the workpiece can be taper cut to provide these contours by controlling relative movement between the wire and workpiece.

Brief description of the drawings

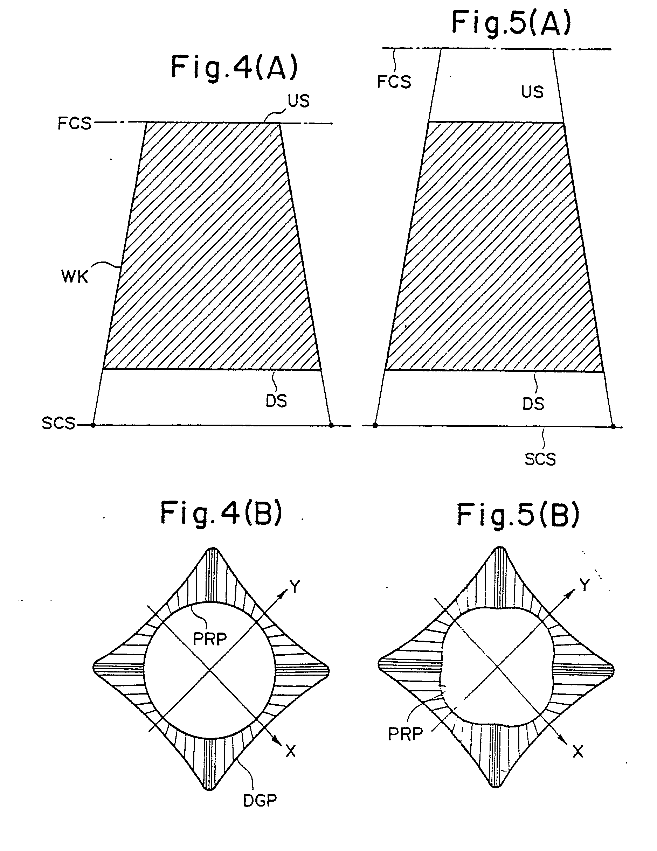

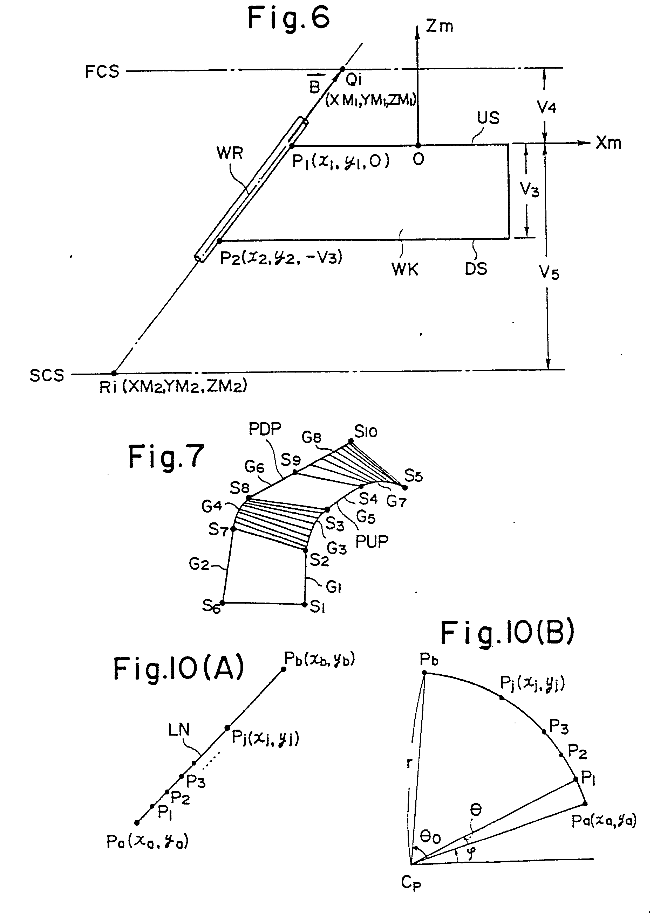

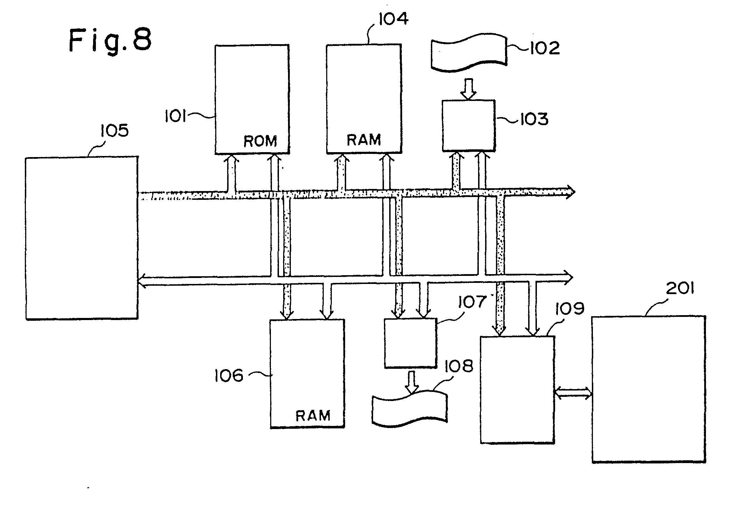

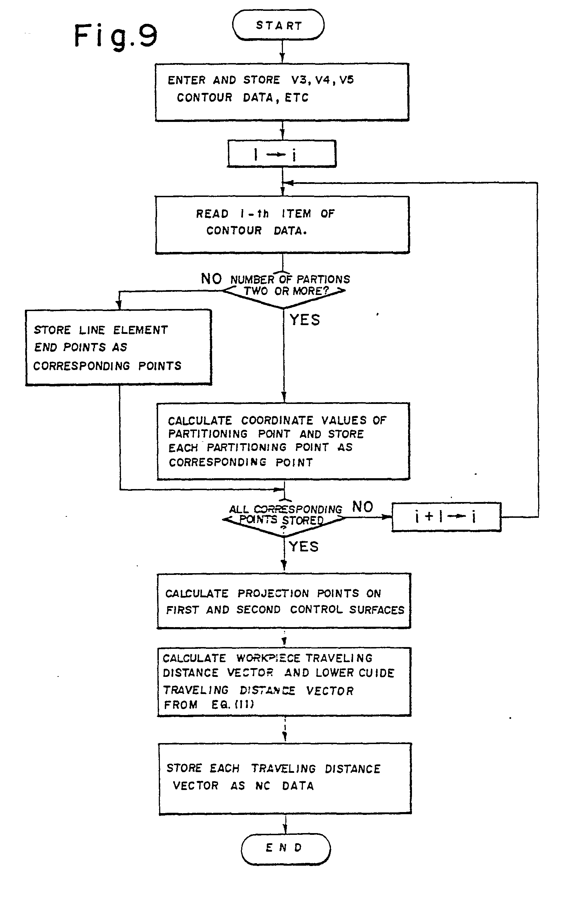

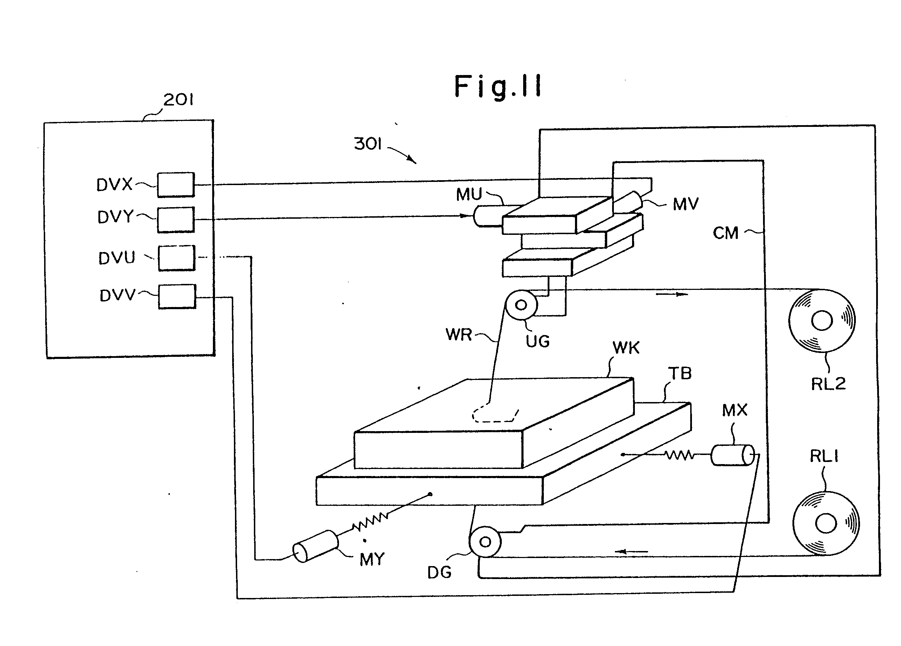

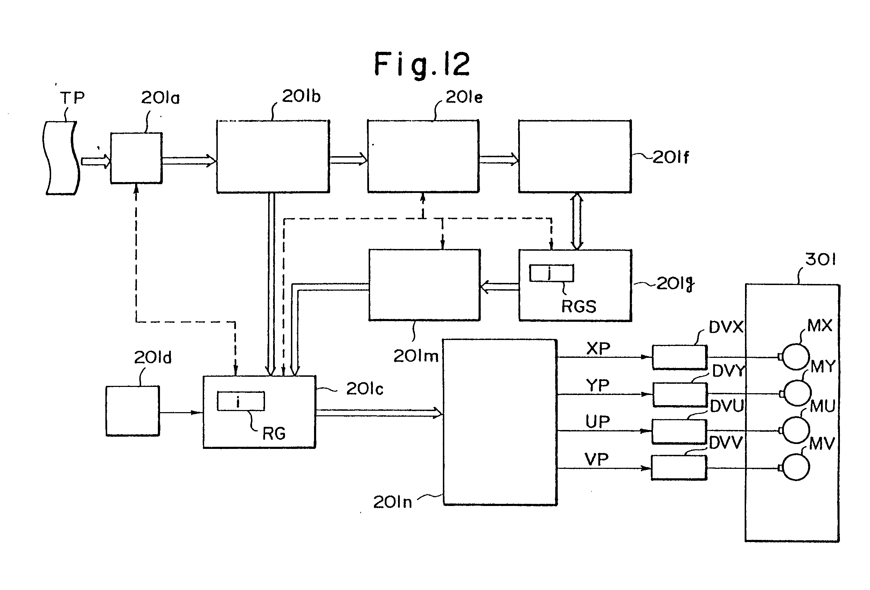

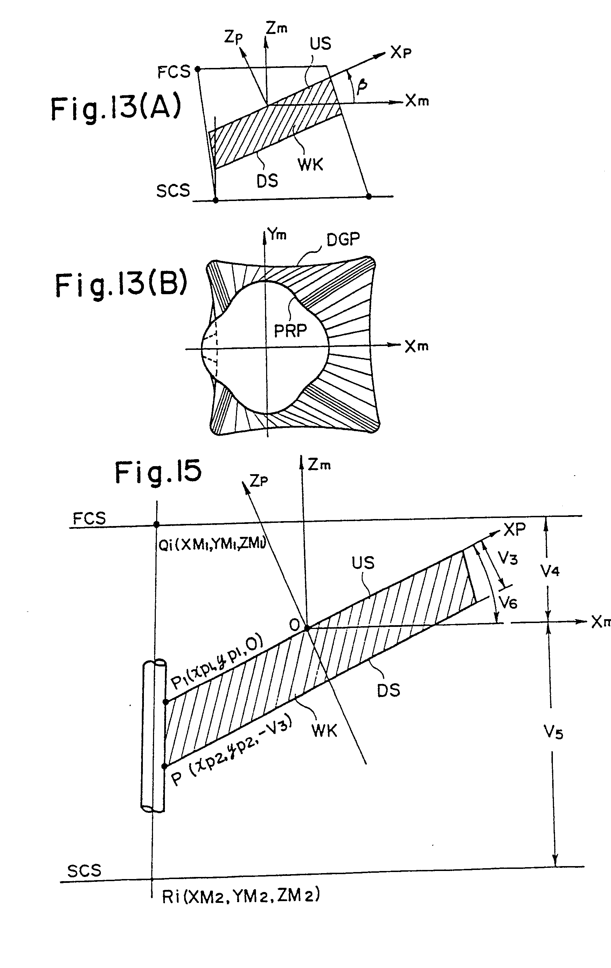

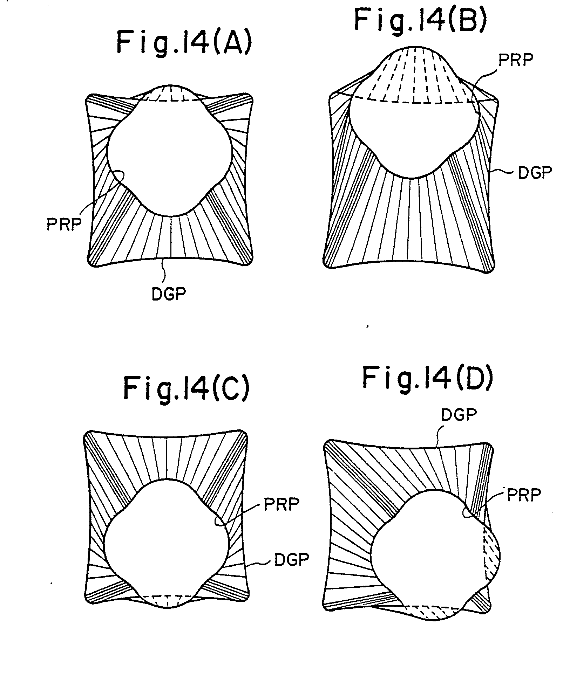

Figs. 1 and 2 are views for explaining taper cutting according to the prior art, Fig. 3 is a view for explaining the relation between control surfaces and part surfaces, Figs. 4 and 5 are views for explaining wire paths on an XY programmed surface and UV lower guide travel surface in a case where an upper surface of a part is a circle and a lower surface contour of the part is a square, Fig. 6 is a view for explaining a taper cutting method according to the present invention, Fig. 7 is a plan view showing a portion of a part, Fig. 8 is a block diagram of an embodiment for the present invention, Fig. 9 is a flowchart of processing for creating NC data, Fig. 10 is a view for explaining the calculation of partitioning points, Figs. 11 and 12 are block diagrams showing another embodiment for the present invention, Figs. 13 and 14 are views for explaining wire paths on an XY programmed surface and UV lower guide travel surface in a case where a part is disposed at an incline with respect to a wire-cut electric discharge machine, and Fig. 15 is a view for explaining the taper cutting method of the present invention in a case where a part is disposed at an incline with respect to a wire-cut electric discharge mcahine.

The present invention will now be described in detail with reference to the drawings in connection with (I) a case where a workpiece is disposed horizontally, and (II) a case where a workpiece is disposed at an incline. In the description that follows, a programmed surface is dealt with as a first control surface, and a surface along which a lower guide travels is dealt with as a second control surface. However, the present invention is in no way limited to this method of selecting the control surfaces.

(I) Workpiece mounted horizontally

Fig. 3 is a view for explaining the relation between control surfaces and part surfaces in a case where a workpiece is mounted horizontally in a wire-cut electric discharge machine. WK denotes a part, US the upper surface of the part, DS the lower surface of the part, WR a wire, FCS a first control surface, which is a programmed surface, and SCS a second control surface, which is a lower guide travel surface. The part WK is disposed is such a manner that its upper and lower surfaces US, DS lie parallel to the first and second control surfaces FCS, SCS, respectively.

Figs. 4 and 5 are views for explaining wire paths on the first and second control surfaces FCS, SCS in a case where the upper surface contour of the part is a circle and the lower surface contour of the part is a square, in which (A) and (B) in each Figure are a longitudinal sectional view of the part and a view showing a projection of the part on the first and second control surfaces, respectively. In Fig. 4, the first control surface FCS and the upper surface US of the part coincide, while a predetermined distance separates the second control surface SCS and the lower surface DS of the part. As a result, a wire path PRP on the first control surface FCS defines a circle, while a wire path DGP on the second control surface SCS defines a compressed shape which is a distorted square. In Fig. 5, on the other hand, the first control surface FCS and upper surface US of the part are spaced apart, as are the second control surface SCS and the lower surface DS of the part. As a result, the wire path PRP on the first control surface FCS no longer defines a circle but rather a distorted shape. Likewise, the wire path DGP on the second control surface SCS does not define a square but a shape having a distorted configuration.

In the present invention, the upper surface US and first control surface FCS constitute a set, and the lower surface DS and second control surface SCS constitute another set. When there is spacing between the two surfaces in at least one of these sets, the position of a point of intersection (projection point) is obtained, namely the position at which a straight line connecting corresponding points on the upper and lower surfaces of the part intersects the control surface in the set having the abovementioned spacing. Thereafter, simultaneous four-axis control is carried out in such a manner that the wire simultaneously traverses corresponding points on the first and second control surfaces, this being performed by using positional data giving these corresponding points. Taper cutting is carried out in this manner to provide a part having different upper and lower surface contours.

Fig. 6 is a view for explaining the taper cutting method of the present invention. In Fig. 6, $V_3$ represents the distance from the upper surface US of a part to the lower surface DS thereof (i.e., $V_3$ represents the thickness of the part), $V_4$ denotes the distance from the upper surface US to the first control surface FCS, and $V_5$ designates the distance from the upper surface to the second control surface SCS. Further, $P_1$ denotes a point on a wire path lying on the upper surface US, and $P_2$ denotes a point on a wire path lying on the lower surface DS. The points $P_1$, $P_2$ are known and are assumed to correspond. $Q_i$, $R_i$ are points (projection points) where a straight line $P_1 P_2$, which connects the corresponding points $P_1$, $P_2$ on the upper and lower surfaces of the part, intersects the first control surface FSC and second control surface SCS, respectively. We shall assume that 0 is the origin of the machine coordinate system, and that the coordinate axes Xm, Ym, Zm are as illustrated. (Note that the Y axis is orthogonal to the plane of the paper).

$V_3$, $V_4$, $V_5$ and the points $P_1$, $P_2$ are already known, as will be set forth below. Accordingly, if the coordinates $(XM_1, YM_1, ZM_1)$, $(XM_2, YM_2, ZM_2)$ of the projection points $Q_i$, $R_i$ on the first control surface FCS and second control surface SCS are found from the above values, then the part desired can be obtained if XY simultaneous two-axis control is performed at the first control surface and UV simultaneous two-axis control is performed at the second control surface, for simultaneous four-axis control overall, in such a manner that the projection points $Q_i$, $R_i$ (i=1, 2...) are traversed simultaneously.

If we assume that the coordinate values of point $P_1$ are $(x_1, y_1, 0)$, and that the coordinate values of point $P_2$ are $(x_2, y_2, -V_3)$, then the unit vector axial components i, j, k of a vector B ($=\overrightarrow{P_1 Q_i}$) having the same direction as the wire WR will be:

$$i = (x_1 - x_2)/\sqrt{(x_1 - x_2)^2 + (y_1 - y_2) + V_3{}^2} \qquad (1)$$

$$j = (y_1 - y_2)/\sqrt{(x_1 - x_2)^2 + (y_1 - y_2) + V_3{}^2} \qquad (2)$$

$$k = V_3/\sqrt{(x_1 - x_2)^2 + (y_1 - y_2) + V_3{}^2} \qquad (3)$$

Therefore, the Z-axis coordinate $ZM_1$ of the point $Q_i$ is expressed by the following:

$$ZM_1 = |B| \cdot k$$

$$= |B| \cdot V_3/\sqrt{(x_1 - x_2)^2 + (y_1 - y_2) + V_3{}^2} \qquad (4)$$

Since $ZM_1$ is equal to the distance $V_4$ from the upper surface US of the part to the first control surface, we have:

$$V_4 = |B| \cdot V_3/\sqrt{(x_1 - x_2)^2 + (y_1 - y_2) + V_3{}^2}$$

Therefore, the magnitude of the vector B is given by:

$$|B| = V_4/V_3 \cdot \sqrt{(x_1-x_2)^2+(y_1-y_2)+V_3{}^2} \tag{5}$$

From the foregoing, the X- and Y-axis coordinate values $XM_1$, $YM_1$ of the projection point $Q_i$ are as follows:

$$XM_1 = x_1 + |B| \cdot i$$

$$= x_1 + V_4/V_3 \cdot (x_1-x_2) \tag{6}$$

$$YM_1 = y_1 + |B| \cdot i$$

$$= y_1 + V_4/V_3 \cdot (y_1-y_2) \tag{7}$$

The coordinate values of the projection point $Q_i$ are thus obtained. Likewise, the coordinate values $XM_2$, $YM_2$, $ZM_2$ along the respective axes of the projection point Ri on the second control surface are given by:

$$XM_2 = x_2 + \frac{(V_5-V_3)}{V_3} \cdot (x_2-x_1) \tag{8}$$

$$YM_2 = y_2 + \frac{(V_5-V_3)}{V_3} \cdot (y_2-y_1) \tag{9}$$

$$ZM_2 = -V_5 \tag{10}$$

Next, projection point coordinates $X_i$, $Y_i$ on the first control surface are found from Eqs. (6) through (9), axial components $U_i$, $V_i$ of a vector from the projection point $Q_i$ on the first control surface to the projection point $R_i$ on the second control surface are obtained, and $X_i$, $Y_i$, $U_i$, $V_i$ are stored as NC data in a memory. It should be noted that $X_i$, $Y_i$, $U_i$, $V_i$ are given by the following:

$$\left. \begin{array}{l} X_i = XM_1 \\ Y_i = YM_1 \\ U_i = (XM_2 - YM_1) \\ V_i = (XM_2 - YM_1) \end{array} \right\} \tag{11}$$

$U_i$, $V_i$ are the axial components of a vector indicating the travelling distance of the lower guide, and $X_i$, $Y_i$ are the axial components of a vector indicating the travelling distance of the workpiece when the upper surface of the part and the first control surface coincide.

Thereafter, by using Eqs. (6) through (9) and Eqs. (11), $X_i$, $Y_i$, $U_i$, $V_i$ (i=1, 2, 3...) are successively found and stored in memory for all corresponding points on the upper and lower surfaces of the part.

When $X_i$, $Y_i$, $U_i$, $V_i$ at all corresponding points have been found, an NC tape is created by using these as NC data. Then, by using the NC tape, or by reading the NC data from the memory one block at a time, simultaneous four-axis control is performed to control the wire-cut electric discharge machine.

Described next will be the entry of the upper and lower surface contours of a part. Fig. 7 is a plan view showing a portion of a part. Let line elements on upper and lower surface contours PUP, PDP of the part be $G_1$, $G_3$, $G_5$, $G_7$ and $G_2$, $G_4$, $G_6$, $G_8$, respectively, and let there be correspondence between points $G_1$ and $G_2$, $G_3$ and $G_4$, $G_5$ and $G_6$, $G_7$ and $G_8$, and so on. A program defining the part contours will then have the form shown below, where points $S_1$ through $S_{10}$ and circular arcs $C_1$, $C_2$, $C_3$ are assumed to be already defined:

```
G₁: S₁, S₂, 1
G₂: S₆, S₇, 1;
G₃: C₁, CW, S₂, S₃, 40
G₄: C₂, CW, S₇, S₈, 40;
G₅: S₃, S₄, 1
G₆: S₈, S₉, 1;
G₇: C₃, CW, S₄, S₅, 50
G₈: S₉, S10, 50
```

In the foregoing program, note that "CW" denotes a circular arc in the clockwise direction, ";" represents the end of a block, and the numeric values 1, 40, 50 are the number of partitions of each line

element $G_1$. In executing NC data creation processing when the number of partitions is two or more, each partitioning point is obtained, $X_i$, $Y_i$, $U_i$, $V_i$ are calculated for each of the corresponding partitioning points using Eqs. (6) through (9) and (11), and these are delivered as an output of NC data.

Fig. 8 is a block diagram of an embodiment for the present invention, and Fig. 9 is a flowchart of processing.

Stored beforehand in a ROM 101 is an NC data creation program. Also, $V_3$ through $V_5$, as well as upper and lower surface contour data (the above-described part contour definitions), have already been stored in a RAM 104 by having been read in from a tape 102 by means of a tape reader 103. A processor 105 reads the contour data from the RAM 104, obtains the coordinates of corresponding points on the upper and lower surfaces of a part by executing the following steps (a), (b), and successively stores the coordinates in a RAM 106. Specifically, the processor 105 performs the following operations:

(a) The processor determines whether the number of partitioning points of two corresponding line elements is two or more. If the number of partitioning points is one, the coordinate values of the respective end points of the line elements are stored in the RAM 106 as corresponding points, and the next item of line element data is read.

(b) If the number of partitioning points is two or more, the processor successively obtains the coordinate values of the mutually corresponding partitioning points on each line element, stores them in the RAM 106 as corresponding points, and reads the next item of line element data.

Note that if we let M represent the number of partitioning points and let $(x_a, y_a)$, $(x_b, y_b)$ represent the coordinate values of two points $P_a$, $P_b$, as shown in Fig. 10(A), then a j-th partitioning point $P_j$ on a straight line LN connecting the foregoing two points will have coordinate values $x_j$, $y_j$ (j=1, 2,...M) given by the following:

$$x_j = x_a + \frac{j}{M}(x_b - x_a) \qquad (12a)$$

$$y_j = y_a + \frac{j}{M}(y_b - y_a) \qquad (12b)$$

Furthermore, if we let $\theta_o$ represent a central angle, r an arc radius, M the number of partitioning points and $\theta(=\theta_o/M)$ an angular increment, as shown in Fig. 10(B), then the coordinate values $x_j$, $y_j$ (j=1, 2,...M) of j-th partitioning point $P_j$ will be given by the following:

$$x_j = x_{j-1} \cdot \cos \theta - y_{j-1} \cdot \sin \theta \qquad (13a)$$

$$y_j = x_{j-1} \cdot \sin \theta - y_{j-1} \cdot \cos \theta \qquad (13b)$$

Note that $x_o=x_a$, $y_o=y_a$ hold in the foregoing equations.

When all corresponding points have been calculted and stored through the foregoing processing, the processor 105 uses Eqs. (6) through (9) and Eqs. (11) to obtain $X_i$, $Y_i$, $U_i$, $V_i$ (i=1, 2,...) for each of the corresponding points, and stores these as NC data in the RAM 106. NC data for different upper and lower surface contours are thus stored in the RAM 106. Thereafter, an NC tape 108 is created by recording the NC data on an NC tape 108 by means of a tape punch 107. Note that it is also permissible to perform tape cutting by reading the NC data directly from the RAM 106 block by block and applying the data to an NC apparatus 201 through an interface circuit 109.

The foregoing relates to a case where all NC data for taper cutting are created and then subsequently used to perform taper cutting. However, an arrangement is possible wherein, each time the workpiece travelling distance vectors $X_i$, $Y_i$ and lower guide travelling vectors $U_i$, $V_i$ are obtained, simultaneous four-axis taper cutting control is executed by using these travelling vectors. Figs. 11 and 12 are views for explaining an embodiment for such a case. We will assume that the first control surface conditions with the upper surface of a workpiece, and that the second control surface coincides with the surface along which the upper guide travels. In a wire-cut electric discharge machine 301, as shown in Fig. 11, a workpiece WK is secured on an X—Y table transported in X and Y directions by motors MX, MY, respectively. A wire WR, meanwhile, is taken up by a reel RL2 and supplied with a voltage by a contacting electrode, not shown, while being paid out by a reel RL1 and tensioned between upper and lower guides UG, DG, respectively. An electrical discharge is produced between the wire and the workpiece WK. The upper guide UG is provided on a column CM and is capable of being moved in the X and Y directions (referred to as U and V axial directions) by motors MU, MV, respectively. The motors MX, MY, MU, MV are driven by respective servo circuits DVX, DVY, DVU, DVV of a numerical control apparatus 201. As shown in Fig. 12, the numerical control apparatus 201 comprises a data reading unit 201a, an input memory 201b, a numerical controller 201c, an operator's panel 201d, a partitioning point calculating unit 201e, a partitioning point memory 201f, a projection point calculating unit 201g, a travelling distance vector calculating unit 201m, a pulse distributor 201n, and the servo circuits DVX, DVY, DVU, DVV.

(1) When a start button on the operator's panel 201d is pressed, the numerical controller causes the tape reading unit 201a to read a part contour definition from a tape TP and a store the definition in the input memory 201b.

(2) When the part contour definition has been read, the numerical controller 201c performs the operation 1→i and stores this in an internal register RG.

(3) The numerical controller 201c then determines whether an i-th block of data is a code indicating the end of the part contour definition. If it is, processing is terminated.

(4) If the data is not an end code, then the numerical controller 201c determines whether the number of partitions included in the part contour definition of the i-th block is one.

(5) If the number of partitions is one, the numerical controller 201c communicates this fact, as well as i, to the partitioning point calculating unit 201e. In response, the partitioning point calculating unit 201e stores in the partitioning point memory 201f the coordinate values of the starting and end points of a line element on the upper surface of a part, as well as the coordinate values of the starting and end points of a line element on the lower surface of the part, these being included in the i-th part contour definition.

(6) Thereafter, the projection calculating unit 201g performs the operations of Eqs. (6) through (9) to obtain the coordinate values $(XM_1, YM_1)$, $(XM_2, YM_2)$ of points of intersection (projection points) between straight lines, which connect the starting points of line elements, and the first and second control surfaces, and to obtain the coordinate values $(XM_1', YM_1')$, $(XM_2', YM_2')$ of points of intersection between straight lines, which connect the end points of line elements, and the first and second control surfaces.

(7) When calculation of the projection points is completed, the travelling vector calculating unit 201m uses the coordinate values of the two projection points corresponding to starting points to perform the operation of Eq. (11), whereby the workpiece travelling distance vectors $X_i$, $Y_i$ and upper guide travelling distance vectors $U_i'$, $V_i'$ are calculated.

(8) Next, the numerical controller 201c performs the following operations to calculate incremental values x, y, u, v along the respective axes:

$$X_i' — X_i → x \qquad (14a)$$

$$Y_i' — Y_i → y \qquad (14b)$$

$$U_i' — U_i → u \qquad (14c)$$

$$V_i' — V_i → v \qquad (14d)$$

These values are applied to the pulse distributor 201n. In response, the pulse distributor 201n generates distributed pulses XP, YP, UP, VP by executing a simultaneous four-axis pulse distribution computation based on the input incremental values x, y, u, v, and applies these pulses to servo circuits DVX, DVY, DVU, DVV for the respective axes, whereby the motors MX, MY, MU, MV for the respective axes are rotated.

(9) If the result of the decision made in step (4) is that there are two or more partitioning points (where M denotes the number of partitions), then the partitioning point calculating unit 201e calculates the partitioning point coordinate values in accordance with Eqs. (12a), (12b) or (13a), (13b), and stores the coordinate values in the partitioning point memory 201f.

(10) Thereafter, the projection point calculating unit sets j equal to 1 and stores this in an internal register RGS, and executes the processing of step (6) by regarding the (j-1)th and j-th partitioning points of each line element on the upper and lower surfaces of the part as starting and end points, respectively. The travelling vector calculating unit 201m executes the processing of step (7), and the numerical controller 201c executes the processing of step (8).

(11) When the wire reaches the j-th partitioning point, the numerical controller 201c so informs the projection point calculating unit 201g. In response, the projection point calculating unit 201g performs the following operation:

$$j+1 → k$$

and subsequently determines whether j>M holds. If j≤M is found to hold, processing from step (10) onward is executed. If j>M is found to hold, then the numerical controller 201c is so informed. In response, the numerical controller 201c performs the following operation:

$$i+1 → i$$

and subsequently executes step (3). Thereafter, taper cutting processing is performed by repeating processing identical to the foregoing.

The foregoing deals with a case where the workpiece is disposed horizontally. Described next will be wire-cut taper cutting processing for a case where a workpiece is mounted on a wire-cut electric discharge machine in an inclined attitude.

(II) Workpiece mounted at inclined attitude

Fig. 13 is a view for describing a wire path when a part is inclined with respect to the first and second control surfaces. The upper and lower surface contours of the part are a circle and square, respectively. (A) in Fig. 13 is a longitudinal sectional view showing the part disposed at an incline, and (B) is a view for describing wire path on the first and second control surfaces. As shown in Fig. 13(A), the upper surface US and lower surface DS of the part (workpiece) WK have an inclination β with respect to the first control surface FCS and second control surface SCS, respectively. As a result, the wire path PRP on the first control surface FCS has a deformed shape rather than the shape of a circle. Likewise, the wire path DGP on the second control surface SCS has a deformed shape which is no longer a square. Figs. 14(A) through 14(D) illustrate wire paths PRP, DGP on control surfaces for different directions of inclination.

According to the present invention for cases where a workpiece is set on a wire-cut electric discharge machine at an inclined attitude, data giving the relative positional relationship between a workpiece and first and second control surfaces, upper surface contour data and lower surface contour data are entered. This is followed by obtaining the positions of points of intersection (projection points), namely the positions at which a straight line connecting corresponding points on the upper and lower surfaces of a part intersects the first and second control surfaces, and then performing simultaneous four-axis control in such a manner that the wire simultaneously traverses corresponding projection points on the first and second control surfaces, this being performed by using positional data giving these projection points. Taper cutting thus carried out provides a part having different upper and lower surface contours, with the taper angle being greater than the maximum taper angle decided by the machine.

Fig. 15 is a view for explaining the taper cutting method of the present invention for a case where a workpiece is disposed at an incline. $V_3$ represents the thickness of the workpiece. Where the axes $X_m$, $Y_m$, $Z_m$ of the machine coordinate system are as illustrated in the drawing, $V_4$ denotes the distance from the $X_m$ axis to the first control surface FCS, $V_5$ designates the distance from the $X_m$ axis to the second control surface SCS, $V_6$ represents an angle of rotation when the workpiece is rotated about the $Y_m$ axis as a rotational support shaft, and $V_7$ (not shown) represents an angle of rotation in a case where the workpiece is rotated about the $X_m$ axis as a rotational support shaft. Further, $P_1$ denotes a point on a wire path lying on the upper surface US, and $P_2$ denotes a point on a wire path lying on the lower surface DS. The coordinates of the points $P_1$, $P_2$ in the part coordinate system $X_p - Y_p - Z_p$ (where the $Y_p$ axis is orthogonal to the plane of the paper) are already known and are assumed to correspond. $Q_i$, $R_i$ are points (projection points) where a straight line $P_1P_2$, which connects the corresponding points $P_1$, $P_2$ on the upper and lower surfaces of the part, intersects the first control surface FSC and second control surface SCS, respectively.

$V_3$ through $V_7$ and the points $P_1$, $P_2$ are already known. Accordingly, if the coordinates $(XM_1, YM_1, ZM_1)$, $(XM_2, YM_2, ZM_2)$ of the projection points $Q_i$, $R_i$ on the first control surface FCS and second control surface SCS are found from the above values, then the part desired can be obtained if XY simultaneous two-axis control is performed on the first control surface and UV simultaneous two-axis control is performed on the second control surface, for simultaneous four-axis control overall, in such a manner that the projection points $Q_i$, $R_i$ (i=1, 2...) are traversed simultaneously.

Let the coordinates of points $P_1$, $P_2$ in the part coordinate system be $(x_{p1}, y_{p1}, 0)$, $(x_{p2}, y_{p2}, -V_3)$, and let the coordinates of the points $P_1$, $P_2$ be $(xm1, ym1, zm1)$, $(xm2, ym2, zm2)$ when transformed into points in the machine coordinate system. The formulae for the transformation from the part coordinate system $(x_p, y_p, z_p)$ to the machine coordinate system $(x_m, y_m, z_m)$ are as follows:

$$\left.\begin{aligned}
x_m &= x_p \cdot \cos V_6 - z_p \cdot \sin V_6 \\[6pt]
y_m &= y_p \cdot \cos V_7 - (x_p \cdot \sin V_6 + z_p \cdot \cos V_6 \cdot \sin V_7) \\[6pt]
z_m &= y_p \cdot \sin V_7 - (x_p \cdot \sin V_6 + z_p \cdot \cos V_6 \cdot \cos V_7)
\end{aligned}\right\} \quad (15)$$

where rotation through $V_6$ about the $Y_m$ axis is performed first, followed by rotation through $V_7$ about the $X_m$ axis.

Therefore, by using Eqs. (15), $P_1$ $(x_{p1}, y_{p1}, 0)$ and $P_2$ $(x_{p2}, y_{p2}, -V_3)$ may be transformed into points in the machine coordinate system, as shown by Eqs. (16), (17) below:

$$\left.\begin{aligned}
x_{m1} &= x_{p1} \cdot \cos V_6 \\[6pt]
y_{m1} &= y_{p1} \cdot \cos V_7 - x_{p1} \cdot \sin V_6 \\[6pt]
z_{m1} &= y_{p1} \cdot \sin V_7 - x_{p1} \cdot \sin V_6
\end{aligned}\right\} \quad (16)$$

$$\left.\begin{aligned}
x_{m2} &= x_{p2} \cdot \cos V_6 + V_3 \cdot \sin V_6 \\[6pt]
y_{m2} &= y_{p2} \cdot \cos V_7 - (x_{p2} \cdot \sin V_6 - V_3 \cdot \cos V_6 \cdot \sin V_7) \\[6pt]
z_{m2} &= y_{p2} \cdot \sin V_7 + (x_{p2} \cdot \sin V_6 - V_3 \cdot \cos V_6 \cdot \sin V_7)
\end{aligned}\right\} \quad (17)$$

If A is defined as follows:

$$A=\sqrt{(x_{m1}-x_{m2})^2+(y_{m1}-y_{m2})^2+(z_{m1}-z_{m2})^2} \qquad (18)$$

then the unit vectors i, j, k of the vector $\overrightarrow{P_1Q_1}$ $(=\overrightarrow{B})$ will be expressed by the following:

$$\left. \begin{array}{l} i=(x_{m1}-x_{m2})/A \\ j=(y_{m1}-y_{m2})/A \\ k=(z_{m1}-z_{m2})/A \end{array} \right\} \qquad (19)$$

Since the Z-axis coordinate $ZM_1$ of point $Q_i$ is $V_4$, the following will hold:

$$k \cdot | B |=(V_4-z_{m1})$$

and the magnitude of the vector $\overrightarrow{B}$ will be expressed as follows:

$$| B |=(V_4-Z_{m1}) \cdot A/(z_{m1}-z_{m2}) \qquad (20)$$

Consequently, the X- and Y-axis coordinate values $XM_1$, $YM_1$, $ZM_1$ of the projection point $Q_i$ are as follows:

$$\left. \begin{array}{l} XM_1=x_{m1}+(V_4-z_{m1}) \cdot (x_{m1}-x_{m2})/(z_{m1}-z_{m2}) \\ YM_1=y_{m1}+(V_4-z_{m1}) \cdot (y_{m1}-y_{m2})/(z_{m1}-z_{m2}) \\ ZM_2=V_4 \end{array} \right\} \qquad (21)$$

The coordinates of the projection point $Q_i$ are thus obtained. Similarly, the coordinate values $XM_2$, $YM_2$, $ZM_2$, along the respective axes, of the projection point $R_i$ on the second control surface are as follows:

$$\left. \begin{array}{l} XM_2=x_{m2}+(V_5-z_{m2}) \cdot (x_{m1}-x_{m2})/(z_{m1}-z_{m2}) \\ YM_2=y_{m2}+(V_5-z_{m2}) \cdot (y_{m1}-y_{m2})/(z_{m1}-z_{m2}) \\ ZM_2=V_5 \end{array} \right\} \qquad (22)$$

This is followed by obtaining the projection point coordinates $(X_i, Y_i)$ on the XY programmed surfaces, as well as the axial components $U_i$, $V_i$ of the vector $\overrightarrow{R_iQ_i}$, and storing $X_i$, $Y_i$, $U_i$, $V_i$ as NC data in a memory. It should be noted that $X_i$, $Y_i$, $U_i$, $V_i$ are given by the following:

$$\left. \begin{array}{l} X_i=XM_1 \\ Y_i=YM_1 \\ U_i=(XM_2-YM_1) \\ V_i=(XM_2-YM_1) \end{array} \right\} \qquad (23)$$

Thereafter, by using Eqs. (21) through (23), $X_i$, $Y_i$, $U_i$, $V_i$ (i=1, 2, 3...) are successively found and stored in memory for all corresponding points on the upper and lower surfaces of the part.

When $X_i$, $Y_i$, $U_i$, $V_i$ at all corresponding points have been found, an NC tape is created by using these as NC data. Then, by using the NC tape, or by reading the NC data from the memory one block at a time, simultaneous four-axis control is performed to control the wire-cut electric discharge machine.

It should be noted that the arrangement of Figs. 8, 11 and 12, in which the workpiece is disposed horizontally, can also be applied to a case where the workpiece is disposed at an incline, though it would be necessary to use Eqs. (21), (22) in place of Eqs. (6) through (9) as the equations for computing the projection points.

According to the present invention, four-axis taper machining can be performed even in cases where the upper and lower contours of a part are completely different. This makes it possible to apply a wire-cut electric discharge machine over a broader range of fields. In addition, taper cutting along different upper and lower surface contours can be performed even if there is a space between the upper surface of a part and the first control surface or between the lower surface of the part and the second control surface. Further, according to the present invention, taper cutting along completely different upper and lower

9

surface contours of a part can be performed even if the workpiece is mounted in an inclined attitude with respect to the control surfaces. Taper cutting can also be conducted even if the taper angle is greater than the maximum taper angle decided by the machine.

The present invention is well-suited for application to wire-cut taper machining in cases where the upper and lower surface contours of a part are completely different from each other.

**Claims**

1. A wire-cut taper cutting method for taper cutting a workpiece (WK) into a predetermined shape by controlling two axes simultaneously on each of two control surfaces (FCS, SCS), specified by entered data to control relative movement between the wire (WR) and workpiece (WK) by simultaneous four-axis control overall, characterized by having:

a first step of entering data which include data for specifying at least an upper surface contour and lower surface contour of a part;

a second step of calculating, in dependence upon data entered in the first step, positions of projection points $(Q_i, R_i)$, wherein when there is spacing between two surfaces in at least one of two sets, one set having the upper surface (US) of the part and a first control surface (FCS) and the other set having the lower surface (DS) of the part and a second control surface (SCS), there are obtained positions of projection points $(Q_i, R_i)$ along a straight line connecting corresponding points $(P_1, P_2)$ on the upper and lower surfaces (US, DS) of the part specified by said contour data, which projection points $(Q_i, R_i)$ are obtained by projecting these points $(P_1, P_2)$ onto the control surface in the set having said spacing; and

a third step of performing simultaneous four-axis control, by using positional data giving corresponding points on the first and second control surfaces (FCS, SCS), in such a manner that the wire (WR) simultaneously traverses the corresponding points on said first and second control surfaces (FCS, SCS).

2. A wire-cut taper cutting method according to claim 1, characterized in that said data includes relative positional relationship data giving a relative positional relationship between the workpiece (WK) and the first control surface (FCS) and between the workpiece (WK) and the second control surface (SCS), and in that said projection points $(Q_i, R_i)$ are obtained in the second step by using said relative positional relationship data, upper surface contour data and lower surface contour data.

3. A wire-cut taper cutting method according to claim 2, characterized by partitioning an upper surface contour and lower surface contour each into a group of line elements comprising a number of straight lines and circular arcs, and entering the upper surface contour line elements and the lower surface contour line elements upon establishing correspondence between said upper surface contour line elements and said lower contour surface line elements.

4. A wire-cut taper cutting method according to claim 3, characterized by calculating positions of projection points, wherein starting and end points of an upper surface contour line element are regarded as corresponding to respective starting and end points of a lower surface contour line element which corresponds to said upper surface contour line element.

5. A wire-cut taper cutting method according to claim 3, characterized by entering a number M of partitions of each line element, and calculating positions of projection points, wherein starting and end points of a j-th (j=1, 2,...M) line element, obtained when an upper surface contour line element is partitioned into said number of partitions, are regarded as corresponding to starting and end points of a j-th line element obtained when a corresponding line element of a lower surface contour is partitioned into said number of partitions.

6. A wire-cut taper cutting method for taper cutting a workpiece (WK) into a predetermined shape by controlling two axes simultaneously on each of two control surfaces (FCS, SCS), specified by entered data, to control relative movement between the wire (WR) and workpiece (WK) by simultaneous four-axis control overall, characterized in that the workpiece (WK) is disposed at an inclined attitude with respect to first and second control surfaces (FCS, SCS), and by having:

a first step of entering relative positional relationship data giving a relative positional relationship between the workpiece (WK) and the first control surface (FCS) and between the workpiece (WK) and the second control surface (SCS), and data for specifying an upper surface contour and lower surface contour of a part;

a second step of calculating, in dependence upon data entered in the first step, positions of projection points $(Q_i, R_i)$, along a straight line connecting corresponding points $(P_1, P_2)$ on upper and lower surfaces (US, DS) of the part specified by said contour data, by projecting these points $(P_1, P_2)$ onto the first and second control surfaces (FCS, SCS); and

a third step of performing simultaneous four-axis control, by using positional data giving said projection points $(Q_i, R_i)$, in such a manner that the wire (WR) simultaneously traverses corresponding projection points on said first and second control surfaces (FCS, SCS)

7. A wire-cut taper cutting method according to claim 6, characterized in that said relative positional relationship data includes an angle of inclination with respect to the control surfaces (FCS, SCS) of the workpiece (WK).

8. A wire-cut taper cutting method according to claim 6, characterized by partitioning an upper surface contour and lower surface contour each into a group of line elements comprising a number of straight lines and circular arcs, and entering the upper surface contour line elements and the lower surface contour line elements upon establishing correspondence between said upper surface contour line elements and said lower contour surface line elements.

9. A wire-cut taper cutting method according to claim 8, characterized by calculating positions of projection points, wherein starting and end points of an upper surface contour line element are regarded as corresponding to respective starting and end points of a lower surface contour line element which corresponds to said upper surface contour line element.

10. A wire-cut taper cutting method according to claim 8, characterized by entering a number M of partitions of each line element, and calculating positions of projection points, wherein starting and end points of a j-th (j=1, 2,...M) line element, obtained when an upper surface contour line element is partitioned into said number of partitions, are regarded as corresponding to starting and end points of a j-th line element obtained when a corresponding line element of a lower surface contour is partitioned into said number of partitions.

## Patentansprüche

1. Verfahren zur Konusbearbeitung eines Werkstücks (WK) mittels Schneiddrahtfunkenerosion zum Ausbilden einer vorbestimmten Form durch gleichzeitiges Steuern zweier Achsen auf jeder von zwei Steuerflächen (FCS, SCS), das durch eingegebene Daten bestimmt ist, um eine relative Bewegung zwischen dem Draht (WR) und dem Werkstück (WK) umfassend durch eine gleichzeitige Vierachsen-Steuerung zu steuern, gekennzeichnet durch das Vorsehen

— eines ersten Schritts zum Eingeben von Daten, die Daten zum Bestimmen zumindest der Kontur einer oberen Oberfläche und der Kontur einer unteren Oberfläche eines Teils enthalten,

— eines zweiten Schritts zum Berechnen der Positionen von Projektionspunkten $(Q_i, R_i)$ in Abhängigkeit von Daten, die in dem ersten Schritt eingegeben wurden, bei dem, wenn ein Abstand zwischen zwei Oberflächen in zumindest einem von zwei Sätzen vorliegt, wobei ein Satz die obere Oberfläche (US) des Teils und eine erste Steuerfläche (FCS) aufweist und der andere Satz die untere Oberfläche (DS) des Teils und eine zweite Steuerfläche (SCS) aufweist, Positionen von Projektionspunkten $(Q_i, R_i)$ längs einer geraden Linie gewonnen werden, welche korrespondierende Punkte $(P_1, P_2)$ auf der oberen und der unteren Oberfläche (US, DS) des Teils verbindet, die durch die Kontur-Daten bestimmt sind, welche Projektionspunkte $(Q_i, R_i)$ durch Projizieren dieser Punkte $(P_1, P_2)$ auf die Steuerfläche in dem Satz gewonnen sind, der den Abstand aufweist, und

— eines dritten Schritts zum Durchführen einer gleichzeitigen Vierachsen-Steuerung durch Benutzen von Positions-Daten, die korrespondierende Punkte auf der ersten und der zweiten Steuerfläche (FSC, SCS) angeben, in einer derartigen Weise, daß der Draht (WR) gleichzeitig die korrespondierenden Punkte auf der ersten und der zweiten Steuerfläche (FSC, SCS) durchfährt.

2. Verfahren zur Konusbearbeitung mittels Schneiddrahtfunkenerosion nach Anspruch 1, dadurch gekennzeichnet, daß die Daten Relativpositionsbeziehungs-Daten enthalten, die eine Relativpositionsbeziehung zwischen dem Werkstück (WK) und der ersten Steuerfläche (FCS) und zwischen dem Werkstück (WK) und der zweiten Steuerfläche (SCS) angeben, und daß die Projektionspunkte $(Q_i, R_i)$ in dem zweiten Schritt durch Benutzen der Relativpositionsbeziehungs-Daten, der Kontur-Daten der oberen Oberfläche und der Kontur-Daten der unteren Oberfläche gewonnen werden.

3. Verfahren zur Konusbearbeitung mittels Schneiddrahtfunkenerosion nach Anspruch 2, gekennzeichnet durch ein jeweiliges Unterteilen einer Kontur der oberen Oberfläche und einer Kontur der unteren Oberfläche in eine Gruppe von Linienelementen, die eine Anzahl von geraden Linien und Kreisbögen umfassen, und ein Eingeben der Linienelemente der Kontur der oberen Oberfläche und der Linienelemente der Kontur der unteren Oberfläche auf das Herstellen einer Beziehung zwischen den Linienelementen der Kontur der oberen Oberfläche und den Linienelementen der Kontur der unteren Oberfläche hin.

4. Verfahren zur Konusbearbeitung mittels Schneiddrahtfunkenerosion nach Anspruch 3, gekennzeichnet durch ein Berechnen der Positionen von Projektionspunkten, bei dem Anfangs- und Endpunkte eines Linienelements der Kontur der oberen Oberfläche als korrespondierend mit betreffenden Anfangs- und Endpunkten eines Linienelements der Kontur der unteren Oberfläche, das mit dem Linienelement der Kontur der oberen Oberfläche korrespondiert, betrachtet werden.

5. Verfahren zur Konusbearbeitung mittels Schneiddrahtfunkenerosion nach Anspruch 3, gekennzeichnet durch ein Eingeben einer Anzahl M von Unterteilungen jedes Linienelements und ein Berechnen der Positionen von Projektionspunkten, bei dem Anfangs- und Endpunkte eines j-ten (j=1, 2...M) Linienelements, die gewonnen werden, wenn ein Linienelement der Kontur der oberen Oberfläche in die Anzahl von Unterteilungen unterteilt wird, als korrespondierend mit Anfangs- und Endpunkten eines j-ten Linienelements betrachtet werden, die gewonnen werden, wenn ein korrespondierendes Linienelement der Kontur der unteren Oberfläche in die Anzahl von Unterteilungen unterteilt wird.

6. Verfahren zur Konusbearbeitung eines Werkstücks (WK) mittels Schneiddrahtfunkenerosion zum Ausbilden einer vorbestimmten Form durch gleichzeitiges Steuern zweier Achsen auf jeder von zwei Steuerflächen (FSC, SCS), das durch eingegebene Daten bestimmt ist, um eine relative Bewegung zwischen dem Draht (WR) und dem Werkstück (WK) umfassend durch eine gleichzeitige Vierachsen-Steuerung zu steuern, dadurch gekennzeichnet, daß das Werkstück (WK) in einer geneigten Stellung in bezug auf eine erste und eine zweite Steuerfläche (FCS, SCS) angeordnet wird und daß vorgesehen sind:

— ein erster Schritt zum Eingeben von Relativpositionsbeziehungs-Daten, die eine Relativpositionsbeziehung zwischen dem Werkstück (WK) und der ersten Steuerfläche (FCS) und zwischen dem Werkstück (WK) und der zweiten Steuerfläche (SCS) angeben, und von Daten zum Bestimmen der Kontur einer oberen Oberfläche und der Kontur einer unteren Oberfläche eines Teils,

— ein zweiter Schritt zum Berechnen der Positionen von Projektionspunkten ($Q_i$, $R_i$) längs einer geraden Linie, die korrespondierende Punkte ($P_1$, $P_2$) auf der oberen und der unteren Oberfläche (US, DS) des Teils verbindet, welche durch die Kontur-Daten bestimmt sind, in Abhängigkeit von Daten, die in dem ersten Schritt eingegeben wurden, durch Projizieren dieser Punkte ($P_1$, $P_2$) auf die erste und die zweite Steuerfläche (FCS, SCS) und

— ein dritter Schritt zum Durchführen einer gleichzeitigen Vierachsen-Steuerung durch Benutzen von Positions-Daten, die die Projektionspunkte ($Q_i$, $R_i$) angeben, in einer derartigen Weise, daß der Draht (WR) gleichzeitig korrespondierende Projektionspunkte auf der ersten und der zweiten Steuerfläche (FCS, SCS) durchfährt.

7. Verfahren zur Konusbearbeitung mittels Schneiddrahtfunkenerosion nach Anspruch 6, dadurch gekennzeichnet, daß die Relativpositionsbeziehungs-Daten eine Neigungswinkel in bezug auf die Steuerflächen (FCS, SCS) des Werkstücks (WK) enthalten.

8. Verfahren zur Konusbearbeitung mittels Schneiddrahtfunkenerosion nach Anspruch 6, gekennzeichnet durch ein jeweiliges Unterteilen einer Kontur der oberen Oberfläche und einer Kontur der unteren Oberfläche in eine Gruppe von Linienelementen, die eine Anzahl von geraden Linien und Kreisbögen umfassen, und ein Eingeben der Linienelemente der Kontur der oberen Oberfläche und der Linienelemente der Kontur der unteren Oberfläche auf das Herstellen einer Beziehung zwischen den Linienelementen der Kontur der oberen Oberfläche und den Linienelementen der Kontur der unteren Oberfläche hin.

9. Verfahren zur Konusbearbeitung mittels Schneiddrahtfunkenerosion nach Anspruch 8, gekennzeichnet durch ein Berechnen der Positionen von Projektionspunkten, bei dem Anfangs- und Endpunkte eines Linienelements der Kontur der oberen Oberfläche als korrespondierend mit betreffenden Anfangs- und Endpunkten eines Linienelements der Kontur der unteren Oberfläche, das mit dem Linienelement der Kontur der oberen Oberfläche korrespondiert, betrachtet werden.

10. Verfahren zur Konusbearbeitung mittels Schneiddrahtfunkenerosion nach Anspruch 8, gekennzeichnet durch ein Eingeben einer Anzahl M von Unterteilungen jedes Linienelements und ein Berechnen der Positionen von Projektionspunkten, bei dem Anfangs- und Endpunkte eines j-ten (j=1, 2...M) Linienelements, die gewonnen werden, wenn ein Linienelement der Kontur der oberen Oberfläche in die Anzahl von Unterteilungen unterteilt wird, als korrespondierend mit Anfangs- und Endpunkten eines j-ten Linienelements betrachtet werden, die gewonnen werden, wenn ein korrespondierendes Linienelement der Kontur der unteren Oberfläche in die Anzahl von Unterteilungen unterteilt wird.

## Revendications

1. Procédé d'usinage conique à fil de coupe pour usinage conique d'une pièce à usiner (WK) en une forme prédéterminée en commandant simultanément deux axes sur chacune de deux surfaces de commande (FCS, SCS), spécifiées par des données entrées afin de commander un déplacement relatif entre le fil (WR) et la pièce à usiner (WK) par commande globale simultanée des quatre axes, caractérisé en ce qu'il comporte:

une première opération d'introduction de données qui comprennent des données servant à spécifier au moins un contour de surface supérieure et un contour de surface inférieure d'une pièce;

une deuxième opération de calcul en fonction de données entrées au cours de la première opération, des positions de points de projection ($Q_i$, $R_i$), dans laquelle lorsqu'il existe une séparation entre deux surfaces dans au moins un des deux ensembles, un ensemble comportant la surface supérieure (US) de la pièce et une première surface de commande (FCS), et l'autre ensemble comportant la surface inférieure (DS) de la pièce et une deuxième surface de commande (SCS), il est obtenu des positions de points de projection ($Q_i$, $R_i$) suivant une ligne droite reliant des points correspondants ($P_1$, $P_2$) sur les surfaces supérieure et inférieure (US, DS) de la pièce, spécifiées par lesdites données de contour, lesquels points de projection ($Q_i$, $R_i$) sont obtenus par projection de ces points ($P_1$, $P_2$) sur la surface de commande dans l'ensemble comportant ladite séparation; et

une troisième opération d'exécution d'une commande simultanée des quatre axes, en utilisant des données de position fournissant des points correspondants sur les première et deuxième surfaces de commande (FCS, SCS), de telle manière que le fil (WR) parcourt simultanément les points correspondants sur lesdites première et deuxième surfaces de commande (FCS, SCS).

2. Procédé d'usinage conique par fil de coupe conformément à la revendication 1, caractérisé en ce que lesdites données comprennent des données de relations de position relatives fournissant une relation de position relative entre la pièce à usiner (WK) et la première surface de commande (FCS), et entre la pièce à usiner (WK) et la deuxième surface de commande (SCS), et en ce que lesdits points de projection ($Q_i$, $R_i$)

# EP 0 124 611 B1

sont obtenus au cours de la deuxième opération en utilisant lesdites données de relations de position relatives, données de contour de surface supérieure et données de contour de surface inférieure.

3. Procédé d'usinage conique par fil de coupe conformément à la revendication 2, caractérisé par la segmentation d'un contour de surface supérieure et d'un contour de surface inférieure, chacun en un groupe d'éléments de ligne comprenant un nombre de lignes droites et d'arcs circulaires, et par l'introduction d'éléments de lignes de contour de surface supérieure et d'éléments de lignes de contour de surface inférieure, après l'établissement d'une correspondance entre lesdits éléments de lignes de contour de surface supérieure et lesdits éléments de lignes de surface de contour inférieur.

4. Procédé d'usinage conique par fil de coupe conformément à la revendication 3, caractérisé par le calcul des positions des points de projection, dans lequel des points de démarrage et de fin d'un élément de ligne de contour de surface supérieure sont considérés comme correspondant aux points de démarrage et de fin respectifs d'un élément de ligne de contour de surface inférieure qui correspond audit élément de ligne de contour de surface supérieure.

5. Procédé d'usinage conique par fil de coupe conformément à la revendication 3, caractérisé par l'introduction d'un nombre M de segmentations de chaque élément de ligne, et par le calcul des positions des points de projection, dans lequel des points de démarrage et de fin de $j^{ième}$ (j=1, 2...M) élément de ligne, obtenus lorsqu'un élément de ligne de contour de surface supérieure est segmenté en un dit nombre de segmentations, sont considérés comme correspondant aux points de démarrage et de fin d'un $j^{ième}$ élément de ligne obtenu lorsqu'un élément de ligne correspondant d'un contour de surface inférieure est segmentée en un dit nombre de segmentations.

6. Procédé d'usinage conique par fil de coupe pour un usinage conique d'une pièce à usiner (WK) en une forme prédéterminée par la commande simultanée de deux axes sur chacune de deux surfaces de commande (FCS, SCS), spécifiées par l'entrée des données afin de commander un déplacement relatif entre le fil (WR) et la pièce à usiner (WK) par une commande globale simultanée des quatre axes, caractérisé en ce que la pièce à usiner (WK) est disposée dans une position inclinée par rapport à la première et à la seconde surfaces de commande (FCS, SCS) et en ce qu'elle comporte:

une première opération d'introduction de données de relations de position relatives fournissant une relation de position relative entre la pièce à usiner (WK) et la première commande de surface (FCS), et entre la pièce à usiner (WK) et la deuxième surface de commande (SCS), et de données servant à spécifier un contour de surface supérieure et un contour de surface inférieure d'une pièce;

une deuxième opération de calcul, en fonction de données entrées au cours de la première opération, des positions des points de projection $(Q_i, R_i)$ le long d'une ligne droite reliant les points correspondants $P_1$, $P_2$ sur des surfaces supérieure et inférieure US, DS de la pièce spécifiés par lesdites données de contour, en projetant ces points $(P_1, P_2)$ sur la première et la seconde surfaces de commande (FCS, SCS); et

une troisième opération d'exécution de commande simultanée des quatre axes, en utilisant des données de position fournissant lesdits points de projection $(Q_i, R_i)$, d'une telle manière que le fil (WR) parcourt simultanément les points de projection correspondants sur lesdites première et deuxième surfaces de commande (FCS, SCS).

7. Procédé d'usinage conique par fil de coupe conformément à la revendication 6, caractérisé en ce que lesdites données de relations de position relatives comprennent un angle d'inclinaison par rapport aux surfaces de commande (FCS, SCS) de la pièce à usiner (WK).

8. Procédé d'usinage conique par fil de coupe conformément à la revendication 6, caractérisé par la segmentation d'un contour de surface supérieure et d'un contour de surface inférieure, chacun dans un groupe d'éléments de ligne comprenant un certain nombre de lignes droites et d'arcs circulaires, et l'introduction d'éléments de lignes de contour de surface supérieure et d'éléments de lignes de contour de surface inférieure établissant une correspondance entre lesdits éléments de ligne de contour de surface supérieure et lesdits éléments de lignes de surface de contour inférieure.

9. Procédé d'usinage conique par fil de coupe conformément à la revendication 8, caractérisé par le calcul des positions des points de projection, dans lequel des points de démarrage et de fin d'un élément de ligne de contour de surface supérieure sont considérés comme correspondant aux points de démarrage et de fin respectifs d'un élément de ligne de contour de surface inférieure qui correspond audit élément de ligne de contour de surface supérieure.

10. Procédé d'usinage conique par fil de coupe conformément à la revendication 8, caractérisé par l'introduction d'un nombre M de segmentations de chaque élément de ligne, et le calcul des positions des points de projection, dans lequel des points de démarrage et de fin d'un $j^{ième}$ (j=1, 2...M) élément de ligne, obtenu lorsqu'un élément de ligne de contour de surface supérieure est segmenté en un dit nombre de segmentations, sont considérés comme correspondant aux points de démarrage et de fin d'un $j^{ième}$ élément de ligne obtenu lorsqu'un élément de ligne correspondant d'un contour de surface inférieure est segmenté en un dit nombre de segmentations.

13

# Fig.1

# Fig.2

# Fig.3

1

Fig.5(A)

Fig.4(A)

FCS

US

FCS

US

WK

DS

SCS

DS

SCS

Fig.4(B)

Fig.5(B)

Y

Y

PRP

PRP

X

X

DGP

2

# Fig.6

# Fig.7

# Fig.10(A)

# Fig.10(B)

Fig.8

## Fig.9

```
                      ( START )
                          │
                          ▼
        ┌─────────────────────────────────┐
        │  ENTER AND STORE  V3, V4, V5     │
        │     CONTOUR  DATA , ETC          │
        └─────────────────────────────────┘
                          │
                          ▼
                   ┌─────────────┐
                   │   1 ─► i     │
                   └─────────────┘
                          │
                          ▼
        ┌─────────────────────────────────┐
        │     READ  i-th  ITEM  OF         │
        │       CONTOUR  DATA.             │
        └─────────────────────────────────┘
                          │
                          ▼
        NO         ╱ NUMBER OF PARTIONS ╲
     ┌────────────◄    TWO OR MORE?      ►
     │             ╲_____╱
     │                      │ YES
     ▼                      ▼
┌──────────────────┐   ┌─────────────────────────────┐
│ STORE  LINE      │   │ CALCULATE  COORDINATE VALUES │
│ ELEMENT END      │   │ OF PARTITIONING  POINT AND   │
│ POINTS AS        │   │ STORE EACH PARTITIONING      │
│ CORRESPONDING    │   │ POINT AS CORRESPONDING POINT │
│ POINTS           │   └─────────────────────────────┘
└──────────────────┘                │
     │                              │
     └──────────────┬───────────────┘
                    ▼
        ╱ ALL CORRESPONDING ╲   NO    ┌─────────────┐
       ◄   POINTS STORED      ►──────►│  i + 1 ─► i  │
        ╲_____╱         └─────────────┘
                    │ YES
                    ▼
        ┌─────────────────────────────────┐
        │ CALCULATE PROJECTION POINTS ON   │
        │ FIRST AND SECOND CONTROL SURFACES│
        └─────────────────────────────────┘
                    │
                    ▼
        ┌─────────────────────────────────┐
        │ CALCULATE  WORKPIECE TRAVELING   │
        │ DISTANCE VECTOR  AND LOWER GUIDE │
        │ TRAVELING  DISTANCE VECTOR       │
        │ FROM  EQ. (11)                   │
        └─────────────────────────────────┘
                    │
                    ▼
        ┌─────────────────────────────────┐
        │ STORE EACH  TRAVELING DISTANCE   │
        │   VECTOR  AS  NC  DATA           │
        └─────────────────────────────────┘
                    │
                    ▼
                ( END )
```

# Fig.11

Fig.12

Fig.13(A)

Fig.13(B)

Fig.15

8

# Fig.14(A)

PRP

DGP

# Fig.14(B)

PRP

DGP

# Fig.14(C)

PRP

DGP

# Fig.14(D)

DGP

PRP